Europäisches Patentamt

European Patent Office

Office européen des brevets

(19)

(11) Veröffentlichungsnummer: **0 214 359**
**B1**

(12) **EUROPÄISCHE PATENTSCHRIFT**

(45) Veröffentlichungstag der Patentschrift:
**02.08.89**

(21) Anmeldenummer: **86100838.1**

(22) Anmeldetag: **22.01.86**

(51) Int. Cl.⁴: **E02D 31/00, E21D 23/00,**
**B09B 1/00**

(54) **Nachträgliche Abdichtungen mit bergmännischem Abbau.**

(30) Priorität: **27.08.85 DE 3530469**

(43) Veröffentlichungstag der Anmeldung:
**18.03.87 Patentblatt 87/12**

(45) Bekanntmachung des Hinweises auf die Patenterteilung:
**02.08.89 Patentblatt 89/31**

(84) Benannte Vertragsstaaten:
**AT BE CH DE FR GB IT LI NL SE**

(56) Entgegenhaltungen:
**DE-A- 2 442 177**
**DE-A- 2 831 486**
**DE-A- 3 046 576**
**DE-A- 3 306 585**
**DE-A- 3 330 897**
**DE-B- 2 634 557**
**FR-A- 1 578 449**

**WO 86/07107**
**GLÜCKAUF, Band 117, Nr. 14, 23. Juli 1981,**
**Seiten 831-835, Bochum, DE; F. MEYER: "Reaktive**
**Kunstharze im Bergbau"**

(73) Patentinhaber: **Niederberg-Chemie GmbH,**
**Postfach 11 63, D-4133 Neukirchen-Vluyn(DE)**

(72) Erfinder: **Schlütter, Aloys, Rheinstrasse 42,**
**D-4152 Kempen 3(DE)**
Erfinder: **Kaewert, Klaus, Gänsestrasse 4,**
**D-4000 Düsseldorf 13(DE)**

**Beschreibung**

Die Erfindung betrifft ein Verfahren zur nachträglichen Abdichtung von Deponien, kontaminierten Flächen oder dergleichen, wobei unter der Deponie bzw. kontaminierten Fläche zunächst eine Erdschicht bergmännisch abgebaut wird und der entstandene Hohlraum wieder verfüllt wird.

In der Vergangenheit wurden Deponien, insbesondere Mülldeponien, häufig mit unzureichender Abdichtung zum Grundwasser hin oder überhaupt ohne Abdichtung errichtet, so daß aus diesen mit dem Oberflächenwasser Schadstoffe in den Boden einsickern und in das Grundwasser gelangen können. Das gleiche gilt für kontaminierte Flächen, z.B. Industrieflächen, auf denen chemische Rückstände, insbesondere Kohlenwasserstoffverbindungen und/oder Schwermetalle sich niedergeschlagen haben.

Nach einem bekannten Vorschlag sollen Deponien durch Umfassungswände sowie durch eine dichte Sohle abgedichtet werden. Die Umfassungswände sollen durch vertikale Schlitze gebildet werden, die mit aufbereitetem, genügend standfestem Material aufgefüllt werden. Für die Sohle ist vorgeschlagen, horizontale oder leicht geneigte Schlitze durch bergmännischen Abbau unter der Deponie herzustellen. Die Schlitze sollen danach mit dem gewonnenen Ausbruchsmaterial unter Ergänzung und Aufbereitung mit geeigneten Stoffen wieder verfüllt werden. Dabei soll eindringendem Wasser dadurch Rechnung getragen werden, daß der Abbaubereich unter geeignetem Überdruck gehalten wird. Ein solcher Überdruck setzt voraus, daß der Abbaubereich gegenüber der äußeren Atmosphäre abgedichtet ist. Infolgedessen muß der gesamte Abbaubereich hermetisch abgeschlossen sein. Dies soll mit Hilfe von Schleusen erreicht werden. Durch die Schleusen muß der gesamte Ausbruch hindurchtransportiert werden. Das gleiche gilt für jedes einzubringende Versatzmaterial sowie für die Bedienungsmannschaften. Dies bedeutet einen wesentlichen Investitionsaufwand für die Schleusen und einen hohen Arbeitsaufwand für das Ein- und Ausschleusen.

Ein weiteres Problem der bekannten Deponieabdichtung stellt die eigentliche Abdichtung der Sohle dar. Bei Vermischung des Versatzes mit einer Bentonitschlämpe ist offen, ob insbsondere gegen Eindringen der Kohlenwasserstoffe eine ausreichende Abdichtung entstanden ist. Das gleiche gilt für Beton. Hinzukommt der zu berücksichtigende Senkungsfaktor bei Versatz. Erfahrungen mit dem Verdichtungseffekt des Versatzmaterials unter Tage, das im Blasverfahren eingebracht wird gehen von einem Senkungsfaktor von 50 % der gebauten Flözmächtigkeit aus. Auch bei einem bedeutend geringeren Senkungsfaktor kann die Senkung zu gravierenden Änderungen in der Belastung der Sohle aus den darüberliegenden Erdschichten, der darüberliegenden Deponie und sich auf der Sohle sammelndem Sickerwasser führen. Jede wesentliche Änderung dieser Belastung führt zu Setzungen in den unter der Sohle liegenden Erdschichten. Damit bricht auch eine aus Beton gefertigte Sohle, sofern die Sohle nicht ausreichend armiert ist. Ausreichende Armierungen lassen sich aber nur mit unverhältnismäßig großem Aufwand einbringen.

Aus der WO 86/07107, die als eine Europäische Anmeldung und deren Inhalt als Stand der Technik gemäß Art. 54(3) und (4) EPÜ gilt, (vgl. die nicht vorveröffentlichten Offenlegungsschriften des deutschen Patentamtes mit den Nr. DE 3 519 124, DE 3 528 864) ist ein Verfahren zum nachträglichen Abdichten von Deponien bekannt, bei dem die Deponie bergmännisch unterfahren wird. Zur Unterfahrung wird eine Schildkonstruktion verwendet. Zugleich ist vorgesehen, daß eine Abdichtungsbahn im Schutz des Schildvortriebes verlegt wird. Wahlweise wird diese Abdichtungsbahn mti einer Lehmschicht und einer darüber vorgesehenen Drainageschicht versehen. Beide Schichten haben jedoch eine geringfügige Dicke, so daß mit fortschreitender Abbaubewegung ein erheblicher Hohlraum verbleibt. Die Folge ist, daß das Hangende im Hohlraum einbricht. Es entsteht ein sogenannter Bruchbau. Der Bruchbau hat seinerseits die Folge erheblicher Setzungen innerhalb der Deponie. Wie oben ausgeführt sind diese Setzungen aber eine beträchtliche Gefahr.

Der Erfindung liegt die Aufgabe zugrunde, den bekannten Vorschlag zur Deponieabdichtung unter Anwendung bergmännischen Abbaus dahin zu verbessern, daß eine wirtschaftliche Lösung gegeben ist.

Dies wird nach der Erfindung durch das Verfahren des Anspruchs 1 gelöst.

Zur Verfestigung ist besonders ein Alpha- und/oder Betasulfat-Halbhydrat aus der Abgaswäsche von Kraftwerken oder ähnlichen Abgaswäschen geeignet.

Die Naßwäsche von Abgasen, insbesondere von Kraftwerken, dient zur Entschwefelung durch Absorption mit Kalkstein ($CaCO_3$) oder Kalk in Form von Oxyd ($CaO$) oder Hydroyxd ($Ca(OH)_2$). Die entstehenden Rückstände enthalten das abgeschiedene $SO_2$ hauptsächlich in Form von Calciumhydroxyd ($CaSO_3 \cdot XH_2O$). Das Sulfid fällt in flüssiger Form an und enthält ggf. auch Staub, wenn der Kalk bzw. Kalkstein in Naßabscheidern eingesetzt wird,die gleichzeitig zur Staub- und $SO_2$-Abscheidung dienen. Das Calciumsulfid kann aber auch relativ staubfrei anfallen, wenn vor der Naßwäsche Elektrofilter eingesetzt sind.

Die beschriebenen Rückständefallen in verhältnismäßig großer Menge an. Die Rückstände sind jedoch wegen ihrer Konsistenz und wegen ihrer chemischen Eigenschaft schwer zu handhaben, insbesondere ist eine Deponie mit erheblichen Schwierigkeiten verbunden. Bisher ist die Deponie solcher Rückstände deshalb von den Aufsichtsbehörden noch nicht genehmigt worden.

Nach der Erfindung wird dem auch dadurch abgeholfen, daß das aus Rückständen der Abgaswäsche aufgearbeitete Substrat zu Beta- und/oder Alpha-Sulfathalbhydrat umkristallisiert und als Deponieabdichtung eingebracht wird, wobei das Alpha-Sulfathalbhydrat trocken gefördert und unter Zugabe von Wasser versetzt wird.

Das Beta- und/oder Alpha-Sulfathalbhydrat entwickelt eine zur Erzeugung einer tragfähigen Sohle hervorragende Frühfestigkeit. Diese Frühfestigkeit stellt sich auch ohne die Verwendung von Anregern ein. Die Verfestigung beginnt bereits nach Sekundenbruchteilem in einem solchen Maße, daß das Material ohne eine rückhaltende bzw. formgebende Schalung auf eine Böschung gespritzt werden kann.

Das Beta- und/oder Alphasulphathalbhydrat kann auch unter Verwendung von Zuschlagstoffen eingesetzt werden. Als Zuschlagstoffe können andere Abfallprodukte, insbesondere mineralische Abfallprodukte eingesetzt werden. Dazu eignet sich z.B. Flugasche aus Elektrofiltern von Kraftwerken und/oder Aschegranulate und/oder Schlacken aus der Kohleverbrennung und/oder Schlacken aus der Hüttenindustrie. Der gewonnene Ausbruch kann gleichfalls als Zuschlag eingesetzt werden.

Zweckmäßigerweise erfolgt das jedoch in der Weise, daß der Ausbruch in separaten Leitungen als Versatz in den entstandenen Hohlraum verblasen wird. Dadurch wird die Gefahr eines unerwünschten frühen Abbindens des Beta- und/oder Alpha-Sulfathalbhydrates umgangen. Diese Gefahr bestünde bei entsprechender Feuchte des Versatzmaterials, wenn dieses in Mischungen mit dem Beta- und/oder Alpha-Sulfathalbhydrat zur Versatzstelle transportiert wird.

Die Menge des verwendeten Beta- und/oder Alpha-Sulfathalbhydrates kann je nach Abbauteufe ein Bruchteil der Menge des Blasversatzes sein. Dann hat das Beta- und/oder Alpha-Sulfathalbhydrat die Aufgabe einer Bindemittelschicht zwischen den einzelnen Partikeln des Blasversatzes.

Die erfindungsgemäße Verwendung von Beta- und/oder Alpha-Sulfathalbhydrat löst nicht nur das Problem der Verfüllung des durch den Abbau entstandenen Hohlraumes und dessen anschließende ausreichende Verfestigung, sondern stellt auch einen bedeutenden Beitrag zur Entsorgung von Kraftwerken dar. Das gleiche gilt für die in Chemiewerken anfallenden Gipse, die gleichfalls zu Beta- und/oder Alpha-Sulfathalbhydrat aufgearbeitet werden können.

Nach einem weiteren Merkmal der Erfindung wird der Abdichtungsbahn vorauslaufend eine verfestigte erste Schicht auf die Sohle aufgebracht. Dazu eignet sich wiederum obiges Beta- und/oder Alpha-Sulfathalbhydrat. Das ist auch dann der Fall, wenn unterhalb der Abdichtungsbahn Grundwasserberührung gegeben ist, da das Beta- und/oder Alpha-Sulfathalbhydrat nicht wasserlöslich ist.

Wie beim Verfestigen des Blasversatzes können jedoch auch übliche Baustoffe Verwendung finden, die eine ausreichende Frühfestigkeit besitzen. Diese Baustoffe wie auch das Beta- und/oder Alpha-Sulfathalbhydrat werden für die unter der Abdichtungsbahn vorgesehene erste Schicht wahlweise mit feinkörnigen Zuschlägen versehen.

Die erste Schicht soll zumindest die Qualität einer Erdbetonschicht aufweisen, um für die Abdichtungsbahn eine geeignete Auflage zu bilden. Die Dicke dieser Schicht beträgt vorzugsweise zwischen 1 und 5 cm.

Die Abdichtungsbahn besteht insbesondere aus einem Äthylencopolymerisat-Bitum.

Wahlweise wird die Abdichtungsbahn auch an der Oberseite mit einer feinkörnigen Schicht von 1 bis 5 cm versehen, bevor der eigentliche Versatz erfolgt. Das dient dem Schutz der Abdichtungsbahn. Diese Schicht kann auch so dick ausgebildet werden, daß im Rahmen der Dehnfähigkeit der Abdichtungsbahn ein Bruchbau mit Senkungsfaktor möglich ist. In diesem Fall empfiehlt es sich, die unterhalb und oberhalb der Abdichtungsbahn eingebrachten Schichten durch Zuschläge soweit abzumagern, daß diese Schichten in hohem Maße nachgiebig sind. Dann können durch Senkungen keine linienförmig verlaufenden Abrisse entstehen.

Die Abdichtungsbahn wird nach der Erfindung abschnittweise, d. h. in Bahnen eingebracht. Die Bahnen haben die Länge der Abbaufront, so daß sie quer zur Abbaurichtung eingebracht werden können. Die Bahnen werden miteinander verschweißt und bilden nach dem Verschweißen eine einheitliche Abdichtungsbahn. Für die Schweißstelle ist eine Doppelnaht vorteilhaft. Die Doppelnaht erlaubt eine Prüfung der Schweißnaht. Das geschieht durch Aufblasen des zwischen beiden Nähten vorhandenen Hohlraumes. Wenn sich kein Druckverlust einstellt, ist die Schweißnaht dicht. Der notwendige Prüfdruck ist relativ gering.

In weiterer Ausbildung der Erfindung ist vorgesehen, daß die Abdichtungsbahn in Form einer Rolle quer zur Abbaurichtung eingezogen wird. Die Rollenbildung erleichtert die Handhabung und ermöglicht das Einbringen von Bahnabschnitten, die bedeutend breiter als übliche Fertigungsbreiten für Kunststoffbahnen sind. Die üblichen Fertigungsbreiten liegen bei ca. 1 oder 2 m. Mit der Rollenform sind Bahnabschnittsbreiten von 15 m und mehr möglich. Derartig breite Bahnen lassen sich aus Einzelbahnen mit üblicher Fertigungsbreite zusammensetzen. Zur Herstellung einer geeigneten Rolle ist eine biegsame Welle von Vorteil. D.h. die Abdichtungsbahn wird auf die Welle gewickelt. Dazu ist die Welle wahlweise mit Greifzangen, Greifklauen oder dergleichen versehen, die gleichmäßig verteilt über der Länge der Welle angeordnet sind. Mit diesen Greifwerkzeugen wird eine Seite der liegend ausgebreiteten Abdichtungsbahn erfaßt. Die Abdichtungsbahn kann aufgewickelt werden, indem z.B. die biegsame Welle über eine Kardan-Welle mit der Antriebswelle eines Baufahrzeuges verbunden wird. Solche Antriebswellen besitzen Unimog-Fahrzeuge, aber auch Traktoren, die in der Landwirtschaft üblich sind.

Beim Aufwickeln ist eine Torsion der biegsamen Welle in der Regel unschädlich, da nach dem Aufwickeln und Sichern der aufgewickelten Abdichtungsbahn anhand der außenliegenden Endkante jede unerwünschte Verdrehung durch Rückwärtsdrehen wieder rückgängig gemacht werden kann. Beim Rückwärtsdrehen verhindern Sicherungen wie Klebbänder ein unerwünschtes Aufwickeln der Abdichtungsbahn. Danach kann die der Länge der Abbaufront entsprechende, z.B. 200 m lange Rolle mit dem gleichen Baustellenfahrzeug gezogen werden. Die innenliegende Welle sichert während des Ziehens, auch bei erheblichen Reibungswiderstand, daß keine übermässige Belastung in der Rolle auftritt. Derartige Reibungswiderstände können auftreten, wenn die Rolle über Erdreich gleitet.

Die Abdichtungsbahn bzw. aufgerollte Abdichtungsbahn wird über Böschung eingezogen. Dazu ist seitlich vom Abbau eine Baugrube mit einer ausreichenden seitlichen Abböschung vorgesehen, über die die Abdichtungsbahn ohne übermässige Verwindung in den Abbau gleiten kann.

Sofern die Abdichtungsbahn ohne Unterbrechung des Abbauvorganges an die bereits gelegte Abdichtungsbahn geschweißt werden kann, ist die Frage der Bahnbreite für den Abbauvorgang von untergeordneter Bedeutung. Bei einer Unterbrechung des Abbauvorgangs zum Anschweißen der Abdichtungsbahn gewinnt die Bahnbreite jedoch für den Abbaufortschritt eine wesentliche Bedeutung. Je größer die Bahnbreite ist, desto geringer ist die Unterbrechung des Abbauvorgangs.

Der Abbau erfolgt wahlweise mit Walzenschrämladern oder Hobeleinrichtungen. Diese Werkzeuge brechen oder fräsen die abzubauende Erdschicht aus. Der Ausbruch fällt auf einen vorzugsweise als Kettenförderer ausgebildeten Förderer. Derartige Förderer besitzen zumeist mittig in geeigneten Rinnen laufende Ketten, die Abständen mit Kratzern versehen sind. Die Kratzer nehmen den darauf fallenden Ausbruch mit. Walzenschrämlader, Hobel und Förderer arbeiten unter einem Schildausbau oder Bockausbau. Insbesondere der Schildausbau eignet sich als Schreitausbau. In diesem Fall befinden sich entlang der Abbaufront eine Vielzahl von Ausbaugestellen, die nach Fortschritt der Abbaufront im Wechsel vorwärts bewegt werden. Z.B. wird nach einem Abbaufortschritt von 50 cm das erste, dritte, fünfte, siebte usw. Ausbaugestell vorgeschoben, während das zweite, vierte, sechste usw. Ausbaugestell in seiner Ausbaustellung verharrt.Zum Vorschreiten werden die zu bewegenden Ausbaugestelle abgesenkt. Nach dem Vorschieben werden die bewegten Ausbaugestelle wieder in Berührung mit dem Hangenden gebracht. Erst danach werden die Ausbaugestelle zwei, vier, sechs usw. nachgezogen. Der Schreitausbau trägt rückwärtig die Blaseinrichtungen für den Blasversatz sowie für Beta- und/oder Alphasulfathalbhydrat bzw. andere Baustoffe. Vorteilhaft ist eine Aufhängung dieser Einrichtungen. Die Aufhängung, z.B. an Ketten, ermöglicht ein Schreiten der Ausbaugestelle oder gravierende Belastung der Blaseinrichtungen.

Da der erfindungsgemäße Abbau häufig auch Lockergestein bewältigen muß, ist für derartige Erdschichten eine Injektion mit Festigern vorgesehen. Als Festiger kommen Kunstharze, z.B. Polyurethane, aber auch Wasserglas, versetzt mit Säureestern in Betracht.

Desgleichen kann auch Alpha-Sulfathalbhydrat und/oder Beta-Sulfathalbhydrat als Festiger verwendet werden.

Der Festiger wird in die Abbaufront und/oder schräg über die Abbaufront injiziert. In der Abbaufront stellt der Festiger sicher, daß der Ausbruch nicht ein Nachlaufen von Lockergestein verursacht. Über der Abbaufront sichert der Festiger das Hangende. Das Injizieren erfolgt durch Aufsetzen einer Spritzeinrichtung und/oder mechanisches Eindringen mittels Injektionslanzen in die Abbaufront bzw. über der Abbaufront. Vorzugsweise werden die Injektionslanzen hydraulisch in die Erdschicht gedrückt. Dazu ist es vorteilhaft, wenn die Injektionslanzen am Ausbaugestell montiert sind. Es können auch mehrere Injektionslanzen in Form eines Messerschildes am Ausbaugestell zusammengefaßt sein.

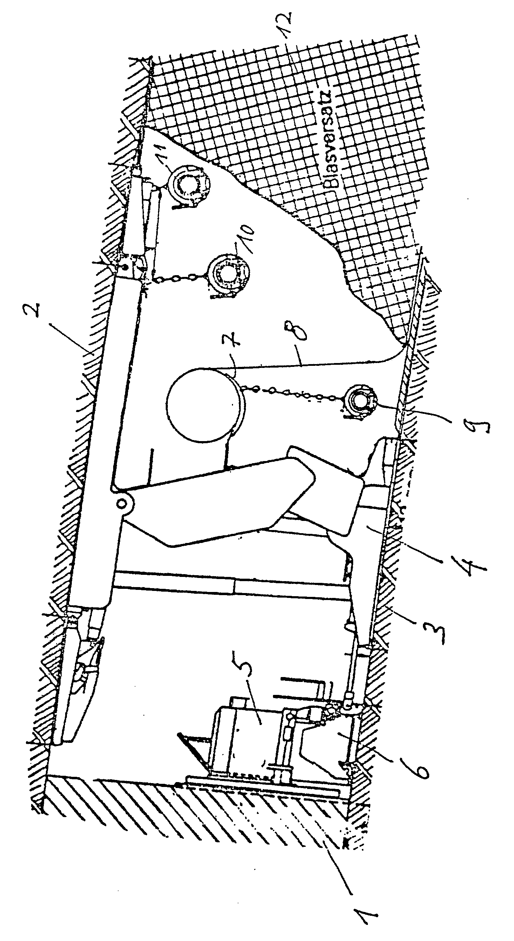

In der Zeichnung ist ein Ausführungsbeispiel der Erfindung dargestellt. Unterhalb einer Deponie wird die mit 1 bezeichnete Erdschicht abgebaut. Das Hangende und das Liegende tragen die Bezeichnungen 2 und 3. Das Hangende wird durch einen Schreitausbau 4 gestützt. Der Schreitausbau 4 besteht aus einer Vielzahl nebeneinander sich entlang der Abbaufront erstreckender Ausbaugestelle, die hydraulisch bewegt werden.

Der Abbau erfolgt mit Hilfe eines Walzenschrämladers 5. Der Ausbruch wird einem Kettenkratzer 6 zugeleitet. Der Walzenschrämlader 5 und der Kettenkratzer sind unmaßstäblich dargestellt. Die gesamte Ausbauhöhe beträgt im Ausführungsbeispiel 3 m.

An der Rückseite tragen die Ausbaugestelle 4 Schalen 7, die im Betriebsfall eine zusammengerollte Abdichtungsbahn 8 aufnehmen. Die Abdichtungsbahn 8 besteht aus einem Äthylencopolymerisat-Bitum.

An der Schale 7 hängt eine Blasversatzleitung 9 mit kombinierter Wasserzuleitung. Aus der Blasversatzleitung 9 wird im Betriebsfall ein Gemisch aus Flugasche und Alpha-Sulfathalbhydrat auf die Sohle des Ausbaus aufgetragen. Die entstehende Schicht hat eine Dicke von ca. 4 cm und bildet die Unterlage für die sich abrollende Abdichtungsbahn 8. Zwischen der Abdichtungsbahn 8 und dem Hangenden wird Blasversatz aus einer Versatzleitung 10 aufgebracht. Als mit 12 bezeichnete Blasversatz wird im wesentlichen durch feinkörnige Anteile des mit dem Walzenschrämladers 5 gewonnenen Ausbruchs verwendet.

Das erfolgt nach Abfördern des Ausbruches mit dem Ketenkratzer 6 durch Absieben und ggf. Brechen des Ausbruches außerhalb des Schildausbaus. Die nicht unterbringbaren Anteile des Ausbruches werden einer anderen Verwendung zugeführt.

Gleichzeitig mit dem Blasversatz wird Beta-Sulfathalbhydrat mit ausreichendem Wasserzusatz auf die Böschung des Blasversatzes geblasen. Das Beta-Sulfathalbhydrat wird über eine Blasleitung 11 mit kombinierter Wasserzuführung zugeführt.

Durch das Beta-Sulfathalbhydrat wird der Blasversatz so verfestigt, daß der Hohlraum zwischen Hangendem 2 und Liegendem 3 nicht nur ausgefüllt, sondern auch auf die eine Setzbewegung ausschließende Festigkeit gebracht wird. Das Alpha-Sulfathalbhydrat und das Beta-Sulfathalbhydrat sind wie folgt aus der Abwäsche eines Steinkohlekraftwerkes gewonnen worden:

Das den Rauchgasen enthaltene Schwefeldioxyd wird in wässriger Lösung absorbiert.

Durch Verwendung von Kalk entsteht $CaSO_3$. $2H_2O$ (Sulfid-Dihydrat). Die aus der Kalkwäsche anfallenden Rückstände werden in einem Behälter mit Luft oxidiert. Die behandelten Rückstände der Kalkwäsche gelangen in einem Eindicker 14. Aus dem Eindicker 14 fällt Kalkschlamm $CaSO_4 . 2H_2O$ (Sulfat-Dihydrat) an. Wird der so entstandene Kalkschlamm einem Trockner 15 zugeführt, so entsteht aufgrund besonderer Kristallisierung sogenannter Beta-Sulfathalbhydratgips.

Zur Erzeugung von Alpha-Sulfathalbhydrat wird der Kalkschlamm in einem Mischer 16 mit Wasser versetzt. Der entstandene Gips-Wasserschlamm wird kontinuierlich in einen Autoklaven 17 gepumpt und unter definierten Bedingungen (Temperatur kleiner 150°C) in Alpha-Gips umkristallisiert. Zusätze zur Steuerung des PH-Wertes und zur Veränderung der Kristalltracht des Alpha-Gipses können in den Autoklaven 17 einsortiert werden und ermöglichen die Erzeugung von Alpha-Gipsen mit unterschiedlichen Eigenschaften. Dieser Alpha-Gips wird in wässriger Suspension kontinuierlich aus dem Autoklaven abgezogen und in einer nicht dargestellten Zentrifuge von der wässrigen Phase getrennt. Durch Trocknen,z.B. in einem Stromtrockner, entsteht pulverförmiger Alpha-Gips ($CaSO_4 . 1/2 H_2O$/Alpha-Halbhydrat).

## Patentansprüche

1. Verfahren zur nachträglichen Abdichtung von Deponien, kontaminierten Flächen oder dergleichen, wobei unter der Deponie bzw. kontaminierten Fläche zunächst eine Erdschicht bergmännisch abgebaut wird und mit fortschreitendem Abbau eine Abdichtungsbahn (8) verlegt wird, und wobei der entstehende Hohlraum hinter der Schildkonstruktion verfüllt und verfestigt wird, gekennzeichnet durch teilweisen Versatz von gewonnenem Ausbrauch oberhalb der Abdichtungsbahn (8) unter gleichzeitiger Verfestigung des Versatzes (12) mit Baustoffen und/oder verfestigten Entsorgungsprodukten.

2. Verfahren nach Anspruch 1, **gekennzeichnet** durch die Verwendung von Alpha- und/oder Beta-Sulfathalbhydrat aus der Abgaswäsche von Kraftwerken mit Kalkmilch und/oder aus Chemiegipsen.

3. Verfahren nach Anspruch 1 oder 2, **dadurch gekennzeichnet**, daß der Abdichtungsbahn (8) vorauslaufend eine verfestigte erste Schicht auf die Sohle (3) aufgebracht wird.

4. Verfahren nach Anspruch 3, **dadurch gekennzeichnet**, daß die erste Schicht eine Dicke zwischen 1 und 5 cm aufweist.

5. Verfahren nach Anspruch 3 oder 4, **gekennzeichnet** durch die Verwendung von Baustoffen mit feinkörnigen Zuschlägen für die erste Schicht.

6. Verfahren nach Anspruch 5, **dadurch gekennzeichnet**, daß die Abdichtungsbahn zunächst mit einer feinkörnigen Schicht von 1 bis 5 cm bedeckt wird.

7. Verfahren nach einem oder mehreren der Ansprüche 1 bis 6, **dadurch gekennzeichnet**, daß die Abdichtungsbahn (8) aus einem Äthylencopolymerisat-Bitum besteht.

8. Verfahren nach Anspruch 7, **dadurch gekennzeichnet**, daß die Abdichtungsbahn (8) in Abschnitten verlegt wird und die Abschnitte miteinander verschweißt werden.

9. Verfahren nach Anspruch 8 **dadurch gekennzeichnet**, daß die Abschnitte als Rollen quer zur Abbaurichtung eingezogen werden.

10. Verfahren nach einem oder mehreren der Ansprüche 1 bis 9, **gekennzeichnet** durch die Verwendung eines Schildausbaus mit vorauslaufender Verfestigung der Abbaufront und/oder des Hangenden.

11. Verfahren nach Anspruch 10, **dadurch gekennzeichnet**, daß das Maß des Vorauslaufs mindestens gleich der Höhe des Abbaus geteilt durch den Tangens des Böschungswinkels vom Lockergestein aus dem Abbau ist.

12. Verfahren nach Anspruch 10 oder 11, **dadurch gekennzeichnet**, daß der Festiger in oder schräg über die Abbaufront injiziert wird.

13. Verfahren nach einem oder mehreren der Ansprüche 10 bis 12, **gekennzeichnet** durch die Verwendung von Wasserglas mit Säureester als Festiger.

14. Verfahren nach einem oder mehreren der Ansprüche 10 bis 13, **gekennzeichnet** durch auf die Abbaufront aufgesetzte oder in die Abbaufront eingestoßene Injektionsgeräte.

## Revendications

1. Procédé d'étanchement, en reprise, de terrains de décharge, de surfaces contaminées ou analogues, dans lequel on procède tout d'abord à l'abattage minier d'une couche de terrain en travail au bouclier sous le terrain de décharge ou sous la surface contaminée, et dans lequel on dépose au fur et à mesure de l'avancement de l'abattage une bande d'étanchéité (8), et dans lequel on remplit et consolide, derrière le bouclier, le volume creux qui apparaît, caractérisé en ce que l'on remblaie partiellement au-dessus de la bande d'étanchéité (8) avec du terrain obtenu par abattage, avec consolidation simultanée du remblai (12) avec des matériaux et/ou des produits de consolidation résultant d'une opération de dépollution.

2. Procédé selon la revendication 1, caractérisé par l'emploi de sulfate alpha et/ou béta semi-hydraté provenant du lavage des fumées des centrales énergétiques au lait de chaux et/ou des gypses de l'industrie chimique.

3. Procédé selon la revendication 1 ou 2, caractérisé en ce que l'on dépose sur le radier (3) une première couche consolidée, précédant la bande d'étanchéité (8).

4. Procédé selon la revendication 3, caractérisé en ce que la première couche présente une épaisseur comprise entre 1 et 5 cm.

5. Procédé selon la revendication 3 ou 4, caractérisé par l'emploi de matériau avec des additifs de granulométrie fine pour la première couche.

6. Procédé selon la revendication 5, caractérisé en ce que l'on recouvre tout d'abord la bande d'étanchéité d'une couche de granulométrie fine de 1 à 5 cm.

7. Procédé selon une ou plusieurs des revendications 1 à 6, caractérisé en ce que la bande d'étanchéité (8) est constituée d'un composé copolymérisat d'éthylène-bitume.

8. Procédé selon la revendication 7, caractérisé en ce que l'on pose la bande d'étanchéité (8) par tronçons et que l'on soude les tronçons les uns aux autres.

9. Procédé selon la revendication 8, caractérisé en ce que l'on amène les tronçons sous forme de rouleaux perpendiculairement à la direction de l'abattage.

10. Procédé selon l'une ou plusieurs des revendications 1 à 9, caractérisé par l'emploi d'un soutènement à bouclier avec consolidation, à l'avance, du front d'abattage et/ou du toit.

11. Procédé selon la revendication 10, caractérisé en ce que la valeur de l'avance de la consolidation est au moins égale à la hauteur de l'abattage divisée par la tangente de l'angle de talus de la pierre non cohérente résultant de l'abattage.

12. Procédé selon la revendication 10 ou 11, caractérisé en ce que l'on injecte le produit de consolidation dans le front d'abattage ou obliquement au-dessus de ce front.

13. Procédé selon une ou plusieurs des revendications 10 à 12, caractérisé par l'emploi d'un verre soluble avec un ester d'acide comme produit de consolidation.

14. Procédé selon l'une ou plusieurs des revendications 10 à 13, caractérisé par des appareils d'injection placés sur le front d'abattage ou aboutés contre ce front d'abattage.

## Claims

1. A method of subsequently sealing dumps, contaminated areas or the like, wherein a soil layer is first excavated by shield driving using mining techniques underneath the dump or contaminated area and, as the excavation advances, a sealing sheet (8) is laid and wherein the resultant cavity behind the shield construction is backfilled and stabilized, characterized by partial backfilling of excavated material above the sealing sheet (8) with simultaneous stabilization of the backfill (12) with building materials and/or stabilizing waste products.

2. A method according to Claim 1, characterized by the use of alpha and/or beta sulphate semihydrate from the flue gas washings of power plants with lime milk and/or from chemical gypsums.

3. A method according to Claim 1 or 2, characterized in that a solidified first layer is applied onto the floor (3) before the sealing sheet (8).

4. A method according to Claim 3, characterized in that the first layer has a thickness between 1 and 5 cm.

5. A method according to Claim 3 or 4, characterized by the use of building materials having finely granular admixtures for the first layer.

6. A method according to Claim 5, characterized in that the sealing sheet is first covered with a finely granular layer of 1 to 5 cm thickness.

7. A method according to one or more of Claims 1 to 6, characterized in that the sealing sheet (8) is of an ethylene copolymer bitumen.

8. A method according to Claim 7, characterized in that the sealing sheet (8) is laid in sections and the sections are sealed (welded) to one another.

9. A method according to Claim 8, characterized in that the sections are pulled in as rolls transversely to the direction of working.

10. A method according to one or more of Claims 1 to 9, characterized by the use of a shield support with prior stabilization of the working face and/or of the roof.

11. A method according to Claim 10, characterized in that the dimension of the prior stabilization is at least equal to the height of the working face divided by the tangent of the angle of repose of the loose material from the working face.

12. A method according to Claim 10 or 11, characterized in that the stabilizer is injected into or obliquely above the working face.

13. A method according to one or more of Claims 10 to 12, characterized by the use of water glass with acid ester as stabilizer.

14. A method according to one or more of Claims 10 to 13, characterized by injection equipment set up on the working face or pushed into the working face.